# EUROPEAN PATENT APPLICATION

(11) **EP 0 767 207 A1**
(43) Date of publication of application: **09.04.1997**
(21) Application number: 96306662.6
(22) Date of filing: 13.09.1996
(51) Int. Cl.: C08K 13/02, C08L 83/04

(54) **Thermosetting silicone gum composition**

(30) Priority: 29.09.1995 JP 276244/95
(71) Applicant: Dow Corning Toray Silicone Company Limited, Tokyo (JP)
(72) Inventor: Honma, Hiroshi, Dow Corning Toray Silicone Co, Ltd, Ichihara-shi, Chiba Prefecture (JP); Matsushita, Takao, Dow Corning Toray Silicone Co,, Ichihara-shi, Chiba Prefecture (JP)
(74) Representative: Kyle, Diana

(57) **Abstract**

A thermosetting silicone gum composition that has a rapid curing speed and excellent mold-releasability. The composition comprises (A) silicone base, (B) organic compound mold release agent, (C) organohydrogen polysiloxane, (D) water, and (E) organic peroxide.

## Description

The present invention relates to a thermosetting silicone gum composition having rapid heat curing speed and excellent mold-releasability.

Organic peroxide curing types of silicone gum compositions) are widely used in all fields because they have excellent storage stability at temperatures below room temperature and excellent handlability. However, these of silicone gum compositions have the drawback of a slow curing speed.

The combination of an organohydrogen polysiloxane with organic peroxide curing types of silicone gum compositions is known in the art as a method for preventing coloring of silicone gums (see JP-A 59-52671). Also known are silicone gum compositions to which a metallic salt of an aliphatic acid, such as calcium stearate, has been added to improve mold-releasability (see JP-B 55-45099).

Furthermore, we have previously presented a method in which water is added to a silicone gum composition to improve mold-releasability (see JP-A 7-126529).

However, each of these silicone compositions had problems in that they had slow curing speeds, their mold-releasability was inadequate, and depending upon usage, they may not have served their purpose.

By adding both an organohydrozen polysiloxane and an organic compound type of mold-releasing agent to a silicone gum composition, we have now found that a silicone gum composition is obtained in which the curing speed is markedly increased and in which outstanding mold-releasabilLty is attained.

The present invention provides a thermosetting silicone gum composition that has a rapid curing speed and excellent mold-releasability. The composition comprises (A) a silicone base composition, (B) an organic compound as mold release agent, (C) an organohydrogen polysiloxane, (D) water, and (E) organic peroxide.

The present invention is a thermosetting silicone gum composition comprising (A) 100 parts by weight of a silicone base composition comprising (a) 100 parts by weight of an organopolysiloxane gum described by the average unit formula

RaSiO_{(4-a)/2} ,

where R is a substituted or unsubstituted monovalent hydrocarbon group, and a is 1.95 to 2.05 and (b) 1 to 100 parts by weight of a reinforcing filler; (B) 0.025 to 5 parts by weight of an organic compound mold release agent; (C) 0.1 to 10 parts by weight of organohydrogen polysiloxane; (D) 0.05 to 5 parts by weight of water; and (E) 0.01 to 10 parts by weight of organic peroxide.

Component (A) in the present invention is a material in which an organopolysiloxane gum is the primary agent, and such types of materials are well known. R in the formula above is a substituted or unsubstituted monovalent hydrocarbon group including alkyl groups such as methyl, ethyl, and propyl; alkenyl groups such as vinyl or allyl; cycloalkyl groups such as cyclohexyl; aralkyl groups such as b-phenylethyl; aryl groups such as phenyl; and alkyl halide groups such as chloromethyl, 3-chloropropyl, and 3,3,3-trichloropropyl; and a is 1.95 to 2.05. The molecular weight of this organopolysiloxane gum is not particularly restricted, and any organopolysiloxane within the range of that labeled an organopolysiloxane gum in the industry can be used. Normally, materials that have a viscosity of at least 107 Mpa·s at 25°C, and a number average molecular weight of 25 x 10⁴ or greater can be used.

The reinforcing filler of component (b) is a material that has been used in the past and examples of such include silica or carbon black. Specific examples of silicas include fumed silicas, precipitated silicas and the like. Preferred among these are silicas with a particle diameter of 50 mm or less, and a specific surface area above 100 m²/g. In addition, surface-treated silicas and hydrophobic silicas that have undergone surface treatment beforehand with organosilanes, organosilazanes, diorganocyclopolysiloxanes and the like, are optimal. Carbon black is used especially when the silicone gum is to be endowed with electrical conductivity, and examples of such include acetylene black, Ketjen black, furnace black, and Saar black.

Component (B)of the present invention is a crucial component for providing mold-releasability. By using (B) together with water, component (D), there is a synergistic effect produced that enables mold-releasability to be further Improved. Specific examples of organic compound mold-releasing agents include lauric acid, stearic acid, palmitic acid, oleic acid, arachic acid, magnesium stearate, calcium stearate, zinc stearate, cobalt stearate, aluminum stearate, barium stearate, zinc laurate, barium laurate, magnesium laurate, calcium laurate, zinc oleate, magnesium oleate, manganese oleate, stearic acid amide, oleic acid amide, lauric acid amide, palmitic acid amide, N-methylstearic acid amide, N-ethyllauric acid amide, N,N-diethylpalmitic acid amide, bis(lauric acid)ethyleneamide, or an alcohol ester of stearic acid, oleic acid, lauric acid, palmitic acid, and arachic acid.

Examples of alcohols for such esters include methanol, ethanol, butanol, octanol, lauryl alcohol, cetyl alcohol, ethylene glycol, and glycerin. In addition, paraffins are also acceptable and examples include, hard paraffin, paraffin wax, paraffin oil, liquid paraffin, and polyethylene types of wax. The amount of component (B) is combined in a range of 0.025 to 5 parts by weight with respect to component (A). Combining too much may induce a decline in the physical properties (especially the heat resistance and the compression set) of our cured silicone gum composition, and if too little is added the objective of mold-releasability cannot be obtained.

Component (C), due to a synergistic effect with the organic peroxide of (component (E), acts to increase the curing speed of the claimed composition. As long as our orcanohydrogen polysiloxane (C) contains 1 bond between a silicon atom and a hydrogen atom in at least one molecule, it is acceptable for use as component (C), and there are no particular restrictions as to its type. The molecular structure of such an organchydrogen polysiloxane may be straight chain, branched chain, ring, network or three-dimensional. It may be either a single polymer or copolymers and combinations of two or more types of the above polymers are also acceptable. In addition, the organohydrogen polysiloxane must have a viscosity in a range of 0.5 to 50,000 Mpa·s at 25°C, with a range of 1 to 10,000 Mpa·s being preferred.

Examples of such an organohydrogen polysiloxane include a methyl hydrogen polysiloxane with both ends of the molecular chain end-blocked by trimethylsiloxy groups, a copolymer of a methyl hydrogen siloxane and a dimethylpolysiloxane with both ends of the molecular chain end-blocked by trimethylsiloxy groups, and a copolymer of a methyl hydrogen siloxane and a dimethylsiloxane with one end of the molecular chain end-blocked by a dimethyl hydrogen siloxy group and the other end-blocked by a trimethylsiloxy group.

The amount at which component (C) is combined in the present composition is within a range of 0.01 to 10 parts by weight per 100 parts by weight of component (A).

The water of component (D) used in the present composition is novel to our composition and is a component that is crucial for providing mold-releasability. This component markedly improves mold-releasability by use with component (B). It is thought that water forms a layer of high temperature steam on the surface layer of our silicone gum composition and on the surface of the mold. Thereby, a minute amount of component (B), present in the surface of the molded product is dissolved. Thus in addition to greatly improving its releasing effect, component (D) acts directly on the surface of the mold and mold release from the mold surface mold is facilitated by the pressure of steam. The amount in which component (D) is added to the present composition is 0.05 to 5 parts by weight per 100 parts by weight of component (A) . This is due to the fact that when component (D) is combined in amounts in excess of 5 parts by weight, voids tend to form inside the molded product. When component (D) is less than 0.05 part by weight, the mold-releasability effect is reduced.

Component (E) of the present invention is a curing agent that causes the claimed composition to be cured, and materials that are commonly known may be used. These organic peroxides include, for example, dicumyl peroxide, di-t-butyl peroxide, t-butylcumyl peroxide, 2,5-dimethyl-2,5-di-t-butylperoxyhexane, 1,1-bis (t-butylperoxy)3,3,5-trimethylcyclohexane, benzoyl peroxide, and 2,4-dichlorobenzoyl peroxide. The amount in which this component (E) is combined is within a range of 0.01 to 10 parts by weight per 100 parts by weight component (A).

In addition to the aforementioned components (A) through (E), the following materials that have been used in silicone gum compositions of the past can be added to our composition to the extent that they do not harm its objective. Such materials include commonly known fillers and additives, for example, inorganic fillers such as diatomaceous earth, quartz, calcium carbonate, calcium silicate, mica, aluminum oxide, aluminum hydroxide, zinc oxide, magnesium oxide, titanium oxide, and red iron oxide; heat resistance agents such as rare earth oxides, rare earth hydroxides, cerium silanolate, and cerium aliphatic acid salts; and silicone oils, such as dimethyl silicone oil, phenylmethyldimethyl silicone oil, and diphenyl silicone oil.

The silicone gum composition of the present invention is easily obtained by uniformly combining components (A) through (E). However, it is particularly preferable to mix 100 parts by weight of the organopolysiloxane gum (component (a)) with 10 to 100 parts by weight of the reinforcing filler (component (b)), and to then add and mix components (A) through (E) into component (A).

Mixing component (C), an organohydrogen polysiloxane, and component (D), water, is also difficult. In this case, it is preferable to mix component (C) or component (D) individually with a filler beforehand, and to then add and combine them.

Since our silicone gum composition has a rapid curing speed during thermosetting, and outstanding mold-releasability during molding, our claimed composition can be applied in molds with complex structures and chips and cracks will not occur in the molded product when it is removed from the mold. Accordingly, our thermosetting silicone gum composition is very effective for use in pressure molding where a mold is used such as press molding, transfer molding, and injection molding.

The present invention will now be explained through the use of application examples. Unless otherwise specified in the examples, "part(s)" indicates "part(s) by weight", and viscosity is a value measured at 25°C. A curastometer (JSR Curastometer III™, a product of Orientek Co., Ltd.) was used to measure curing speeds. The time (in seconds) for the torque value to reach 90% at a temperature of 170°C is indicated as T₉₀. Moreover, the mold releasability was evaluated by filling a mold that had protrusions (77 protrusions) with the silicone gum composition. Then, the composition was pressure molded at 170°C for 10 minutes. Thereafter, the silicone molded product obtained was extracted by force. The number of protrusions of the molded product pulled off during extraction was used as an indication of mold releasability. This value (Mold Releasability) was expressed as the number of protrusions remaining in the mold after extraction of the molded product in relation to the total number (77) of protrusions.

Example 1. 100 parts of an organopolysiloxane gum (degree of polymerization of 5,000) comprised of 99.85 mole% of dimethylsiloxy units, 0.15 mole% of methylvinylsiloxy units, and end-blocked with dimethylvinylsiloxy groups at both ends, 5.0 parts of a dimethylsiloxane with both ends end-blocked with a silanol group and having a viscosity of 60 Mpa·s, and 45 parts of silica with a specific surface area of 130 m²/g (formed by a wet process) were introduced into a kneader mixer and mixed under heat to form a silicone base composition. Then, compositions were prepared having 0.3 part stearic acid, either 0.5 part or 1.0 part of a methyl hydrogenpolysiloxane (viscosity of 10 Mpa·s) end-blocked with trimethylsiloxy groups at both ends, as well as 0.5 part or 1.0 part water, were combined with 100 parts of this silicone base composition. These compositions are shown in Table I. Next, 0.4 part of 2,5-dimethyl-2,5-di-t-butylperoxyhexane was added to these compositions and the compositions mixed to form thermosetting silicone gum compositions. For comparison purposes, materials to which methylhydrogen polysiloxane and water were not added were also prepared. The properties of these compositions were measured in the same manner as described above and the results are also reported in Table I.

**Table I**

| | Application Examples | | | | Comparative Examples | |
|---|---|---|---|---|---|---|
| Component* | 1-1 | 1-2 | 1-3 | 1-4 | 1-1 | 1-2 |
| Silicone Base Compound | 100 | 100 | 100 | 100 | 100 | 100 |
| Stearic Acid | 0.3 | 0.3 | 0.3 | 0.3 | 0.3 | 0.3 |
| Methylhydrogen Polysiloxane | 0.5 | 1.0 | 0.5 | 1.0 | - | 0.5 |
| Water | 0.5 | 0.5 | 1.0 | 1.0 | 0.5 | - |
| T₉₀ (170°C) (sec) | 79 | 36 | 76 | 36 | 170 | 82 |
| Mold Releasability | 0/77 | 2/77 | 0/77 | 0/77 | 0/77 | 77/77 |

| | | | | | | |
|---|---|---|---|---|---|---|
| *Components are provided as parts by weight in the composition. | | | | | | |

Example 2. 100 parts of an organopolysiloxane gum (degree of polymerization of 5,000) comprised of 99.85 mole% of dimethylsiloxy units, 0.15 mole% methylvinylsiloxy units, and end-blocked with dimethylvinylsiloxy groups at both ends, together with 8.5 parts of dimethylsiloxane with both ends end-blocked with silanol groups and having a viscosity of 60 Mpa·s, and 40 parts of fumed silica with a specific surface area of 200 m²/g were introduced into a kneader mixer and mixed under heat to form a silicone base composition. Then, into the composition was mixed 0.3 part calcium stearate, 8 parts of a copolymer oil comprising 50 mole% of phenylmethylsiloxy units, and 50 mole% of dimethylsiloxy units, and having both ends end-blocked by silanol groups and having a viscosity of 10 Mpa·s, and 1.0 part of red iron oxide. Then, in the same manner as in Example 1, a methylhydrogen polysiloxane (viscosity of 10 mPa·s), water, and 0.4 part of 2,5-dimethyl-2,5-di-t-butylperoxyhexane were added to 100 parts of this composition and mixed to obtain the compositions of Table II. For comparison purposes, the comparisons examples described in Table II were prepared in the same manner as the application examples. The cure properties and mold-releasability of these compositions were measured and the results are given in Table II.

**Table II**

| | Application Examples | | | | Comparison Examples | |
|---|---|---|---|---|---|---|
| Component* | 2-1 | 2-2 | 2-3 | 2-4 | 2-1 | 2-2 |
| Silicone Base Compound | 100 | 100 | 100 | 100 | 100 | 100 |
| Calcium Stearate | 0.3 | 0.3 | 0.3 | 0.3 | 0.3 | 0.3 |
| Red Iron Oxide | 1.0 | 1.0 | 1.0 | 1.0 | 1.0 | 1.0 |
| Phenyl Oil | 8.0 | 8.0 | 8.0 | 8.0 | 8.0 | 8.0 |
| Methylhydrogen Polysiloxane | 0.5 | 0.5 | 1.0 | 1.0 | - | 0.5 |
| Water | 0.5 | 0.5 | 1.0 | 1.0 | 0.5 | - |
| T₉₀ (170°C) (sec) | 84 | 52 | 87 | 50 | 175 | 89 |
| Mold Releasibility | 0/77 | 0/77 | 0/77 | 0/77 | 0/77 | 70/77 |

| | | | | | | |
|---|---|---|---|---|---|---|
| *Components are provided as parts by weight in the composition | | | | | | |

Example 3. Injection molding was performed using the thermosetting silicone gum compositions obtained in Example 1 (Application Example 1-4 and Comparative Example 1-1). A keypad was molded from these materials using a quadrilateral mold. The injection molder used was a silicone gum molder, a product of Matsuda™ Seisakusho (KK). The molding temperature was 175°C. When injection molding was performed with the silicone gum composition of Application Example 1-4 good produces were obtained molded with a curing time of 60 seconds. The mold-releasability was also very good and in 40 shots the defect rate was zero. With the silicone gum composition of Comparative Example 1-1, the mold-releasability was such that a curing time of 200 seconds was required to obtain a good product.

Example 4. The compositions obtained in Example 2 were oil-bleedable silicone gum compositions that are intended to be used as a gum stopper for a wire harness. However for evaluation purposes, injection molding was carried out in the same manner as in Example 3 using a keypad mold. Evaluation was also performed as in Example 3, using the compositions of Example 2-4 and Comparative Example 2-1. A good produce was molded with the silicone gum composition of Application Example 2-4 with a curing time of 70 seconds, and the mold-releasability was also very good. The defect rate due to defects from removal from the mold was 0 in 40 shots. With the silicone gum composition of Comparative Example 2-1, the mold-releasability was such that a curing time of 210 seconds was required to obtain a good product.

Example 5. Compositions were manufactured by adding, to 100 parts of the silicone base composition obtained in Example 1, the components shown in Table III which include lauric acid amide, ethyl stearate, microcrystalline wax melting point of 84°C), 0.6 part of a three-dimensional methylhydrogen polysiloxane (content of silicon-bonded hydrogen of 1 wt%, viscosity of 18 Mpa·s) composed of SiO_{4/2} units and H(CH₃)₂SiO_{1/2} units, 0.5 part water, 2,5-dimethyl-2,5-di-t-butylperoxyhexane, and di-t-butyl peroxide. The mold-releasability and curing speed of these compositions were measured and the results are reported in Table III.

**Table III**

| | Application Examples | | | | | |
|---|---|---|---|---|---|---|
| Component* | 5-1 | 5-2 | 5-3 | 5-4 | 5-5 | 5-6 |
| Silicone Base Compound | 100 | 100 | 100 | 100 | 100 | 100 |
| Lauric Acid Amide | 0.3 | - | - | 0.3 | 0.3 | 0.3 |
| Ethyl Stearate | - | 0.3 | - | - | - | - |
| Microcrystalline Wax | - | - | 0.3 | - | - | - |
| Methylhydrogen polysiloxane | 0.6 | 0.6 | 0.6 | 0.6 | 0.6 | 0.6 |
| Water | 0.5 | 0.5 | 0.5 | 0.5 | 0.5 | 0.5 |
| 2,5-Dimethyl-2,5-di-t-buthylperoxyhexane | 0.4 | 0.4 | 0.4 | 0.2 | 0.1 | - |
| di-t-Butyl peroxide | - | - | - | - | - | 0.4 |
| T₉₀ (170°C) (sec) | 53 | 50 | 52 | 76 | 92 | 48 |
| Mold Releasability | 0/77 | 0/77 | 1/77 | 0/77 | 0/77 | 2/77 |

| | | | | | | |
|---|---|---|---|---|---|---|
| *Components are provided as parts by weight in the composition. | | | | | | |

## Claims

1. A thermosetting silicone gum composition comprising:
(A) 100 parts by weight of a silicone base composition comprising (a) 100 parts by weight of an organopolysiloxane gum described by the average unit formula
RₐSiO_{(4-a)/2} ,
where R is a substituted or unsubstituted monovalent hydrocarbon group, and a is 1.95 to 2.05, and (b) 1 to 100 parts by weight of a reinforcing filler;
(B) 0.025 to 5 parts by weight of an organic compound mold release agent;
(C) 0.1 to 10 parts by weight of organohydrogen polysiloxane;
(D) 0.05 to 5 parts by weight of water; and
(E) 0.01 to 10 parts by weight of organic peroxide.

2. A composition according to Claim 1, where the organopolysiloxane gum (a) has a viscosity of at least 107 Mpa·s at 25°C and number average molecular weight of 25 x 10⁴ or greater.

3. A composition according to Claim 1 or 2, where the organic compound mold release agent (B) is selected from lauric acid, stearic acid, palmitic acid, oleic acid, arachic acid, magnesium stearate, calcium stearate, zinc stearate, cobalt stearate, aluminium stearate, barium stearate, zinc laurate, barium laurate, magnesium laurate, calcium laurate, zinc oleate, magnesium oleate, manganese oleate, stearic acid amide, oleic acid amide, lauric acid amide, palmitic acid amide, N-methylstearic acid amide, N-ethyllauric acid amide, N,N-diethylpalmitic acid amide, and bis(lauric acid)ethyleneamide.

4. A composition according to Claim 1 or 2, where the organic compound mold releasing agent (B) is selected from an alcohol ester of stearic acid, oleic acid, lauric acid, palmitic acid, and arachic acid and the alcohol substituent of the ester is selected from the group consisting of methanol, ethanol, butanol, octanol, lauryl alcohol, cetyl alcohol, ethylene glycol, and glycerin.

5. A composition according to Claim 1 or 2, where the organic compound mold release agent (B) is a paraffin.

6. A composition according to any of Claims 1 to 5, where the organohydrogen polysiloxane (C) has a viscosity in a range of 0.5 to 50,000 Mpa·s at 25°C.

7. A composition according to any of claims 1 to 6, where the organohydrogen polysiloxane (C) is selected from methyl hydrogen polysiloxane with both ends of the molecular chain end-blocked by trimethylsiloxy groups, a copolymer or a methyl hydrogen siloxane and a dimethylpolysiloxane with both ends of the molecular chain end-blocked by trimethylsiloxy groups, and a copolymer of a methylhydrogen siloxane and a dimethylsiloxane with one end of the molecular chain end-blocked by a dimethylhydrogen siloxy group and the other end end-blocked by a trimethylsiloxy group.

8. A composition according to any of claims 1 to 7, where the organic peroxide (E) is selected from dicumyl peroxide, di-t-butyl peroxide, t-butylcumyl peroxide, 2,5-dimethyl-2,5-di-t-butylperoxyhexane, 1,1-bis (t-butylperoxy)3,3,5-trimethylcyclohexane, benzoyl peroxide, and 2,4-dichlorobenzoyl peroxide.
